Europäisches Patentamt

European Patent Office

Office européen des brevets

(19)

(11) Publication number : **0 482 904 A1**

# (12) EUROPEAN PATENT APPLICATION

(21) Application number : **91309782.0**

(22) Date of filing : **23.10.91**

(51) Int. Cl.⁵ : **F16L 55/027, F16K 5/06**

(30) Priority : **23.10.90 GB 9023043**

(43) Date of publication of application :
**29.04.92 Bulletin 92/18**

(84) Designated Contracting States :
**AT BE CH DE DK ES FR GR IT LI NL SE**

(71) Applicant : **Allen, Neil**
**59 Roundham Road**
**Paignton, Devon TQ4 6DS (GB)**

(72) Inventor : **Allen, Neil**
**59 Roundham Road**
**Paignton, Devon TQ4 6DS (GB)**

(74) Representative : **Craske, Stephen Allan et al**
**Craske & Co. 1 Southernhay West**
**Exeter, South Devon EX1 1JG (GB)**

(54) **Flow restrictor.**

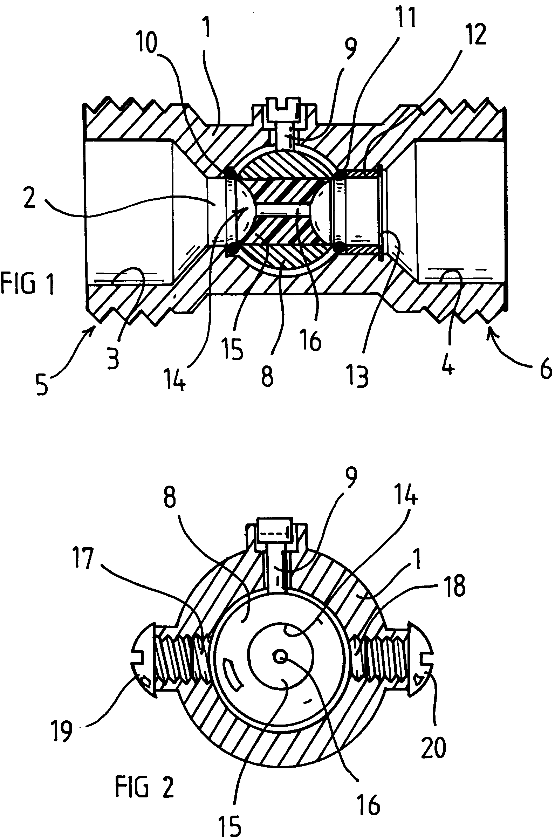

(57)    A housing 1 for connection in a water flow
path contains a spherical restrictor body 8 that
is rotatable from the exterior of the housing via
a shaft 9. The body 8 contains an insert 15
which defines a restriction 16 in the flow path
for reducing water consumption. In the event of
a blockage in the restriction 16 the body 8 can
be rotated through 180° to reverse the flow
through the restriction in an effort to clear the
blockage. Alternatively, the body 8 can be
rotated through 90° to bring the restriction into
alignment with two holes 17, 18 in the housing
(Fig. 2) so that the restriction can be cleared
from the exterior of the housing.

FIG 1

FIG 2

EP 0 482 904 A1

## TECHNICAL FIELD OF THE INVENTION

This invention relates to flow restrictors, particularly, but not exclusively, for use in restricting the flow of water.

## BACKGROUND

In many areas of the world water is becoming an increasingly valuable commodity. As a result, measures are being sought to reduce unnecessary water consumption, particularly in public buildings.

It has been proposed to place a flow restriction in the supply to taps and other appliances in order to restrict the rate at which water leaves the appliance. However, the presence of any restriction in a supply pipe can lead to blockages which are time consuming and costly to rectify.

US 4 130 128 discloses a flow restrictor which includes a housing which defines a flow path for fluid, and a restrictor member is disposed in the flow path to form a restriction to flow of fluid therethrough. The restrictor member is arranged such that it is rotatable out of its normal operating position in which the restriction is substantially aligned with the flow path, to a second position in which one end of the restriction is in register with an access hole in the housing. The access hole permits the size of the orifice to be changed without uncoupling the flow restrictor from the flow path, but it would still be necessary to dis-assemble the valve in order to completely remove any material which might block the restriction.

An aim of the present invention is to provide means for restricting flow of water which is arranged such that any blockages which might occur can easily and quickly be rectified.

## SUMMARY OF THE INVENTION

The present invention proposes that when the restrictor member is in its second position, opposite ends of the restriction are simultaneously in register with a pair of access holes in the housing so as to form a through-passage.

Thus, an obstruction can easily be blown or poked out of the restriction from the exterior of the housing without having to dis-assemble the flow restrictor or shut off the fluid supply.

Preferably the restrictor member is rotatable through substantially a full 180° so that the fluid can flow in the opposite direction through the restriction. In many cases this will be sufficient to clear any obstruction.

## BRIEF DESCRIPTION OF THE DRAWINGS

The invention is exemplified in the accompanying drawings, in which:

Figure 1 is a longitudinal section through a flow restrictor of the invention, and
Figure 2 is a transverse mid-section through the flow restrictor.

## DETAILED DESCRIPTION OF THE DRAWINGS

The flow restrictor comprises a generally cylindrical housing 1 which defines a straight axial flow path 2. The flow path 2 is stepped outwardly at each end, 3, 4, to receive an end portion of a water pipe, and the housing is externally screw-threaded at each end, 5, 6, to receive a compression nut (not shown) for compressing a sealing olive onto the respective pipe.

The mid region of the housing 1 is enlarged to contain a spherical body 8 having a radial operating shaft 9 which projects radially through the wall of the housing. The outer end of the shaft 9 is slotted to receive a screw-driver or similar tool by which the body 8 can be rotated about the axis of the shaft 9, O-ring seals 10, 11 are inserted between the body 8 and the housing 1 at each side of the body 8 to surround the flow path 2, thus preventing water from bypassing the body 8. Access to the seals 10, 11 is gained by a bush 12 which is inserted in one end of the flow path 2 and retained by a circlip 13.

The spherical body 8 contains an opening 14 which passes diametrically through the body 8 perpendicular to the axis of the shaft 9, and this opening 14 in turn contains a tight fitting restrictor insert 15 of Nylon or similar plastics. The insert 15 is substantially cylindrical and contains an axial passage 16 of significantly smaller cross sectional area than the opening 14 to act as a restriction to flow of water through the flow path 2. The wall of the housing 1 also contains a pair of diametrically aligned holes 17, 18 (Fig. 2) which lie on an axis which is mutually perpendicular to the axes of the housing 1 and the shaft 9. These holes are normally closed by screw-threaded plugs 19, 20 to prevent entry of dirt.

In use, the device is connected in the water supply pipe to a tap for example. The restriction 16 is normally aligned with the axis of the housing 1 so that water can flow at a restricted rate through the insert 15. In the event of a blockage occurring in the restriction 16, the spherical body 8 is rotated through 180° by the shaft 9 until the restriction is again aligned with the flow path 2. However, since the water pressure will now be acting in the opposite direction through the insert 15 this will tend to clear any blockages in the insert. If this should fail, the body 8 can be rotated to bring the restriction 16 into alignment with the holes 17 and 18, and after removal of the plugs 19 and 20, a piece of wire or the like can be pushed through the restriction 16 to clear any obstruction.

If it is required to change the size of the restriction 15 the insert can be replaced by one with a different size restriction or the restriction can be enlarged, e.g.

by drilling via the access holes 17 and 18.

It will be appreciated that the insert could be integrally formed in the body 8, and that the body 8 could be cylindrical instead of spherical, with its axis aligned with the shaft 9.

## Claims

1. A flow restrictor comprising a housing (1) defining a flow path (2) for fluid, and a restrictor member (8, 15) which is disposed in the flow path to define a restriction (16) therein, the restrictor member being arranged such that it is rotatable out of its normal operating position, in which the restriction is substantially aligned with the flow path, to a second position in which the restriction is in register with an access hole (17) in the housing,

   characterised by the fact that, in the second position of the restrictor member (8, 15), opposite ends of the restriction (16) are simultaneously in register with a pair of access holes (17, 18) in the housing so as to form a through-passage.

2. A flow restrictor according to Claim 1, in which the restrictor member (8, 15) is rotatable through substantially 180° so that the fluid can flow in opposite directions through the restriction (16).

3. A flow restrictor according to Claim 1 or 2, in which the restrictor member comprises a rotatably mounted outer portion (8) which contains a replaceable substantially cylindrical insert (15) containing the restriction (16).

4. A flow restrictor according to Claim 3, in which the insert (15) is formed of plastics.

5. A flow restrictor according to Claim 3 or 4, in which the outer portion (8) of the restrictor member is manually rotatable from the exterior of the housing via a shaft (9) which is secured to the said outer portion.

6. A flow restrictor according to Claim 3, 4 or 5, in which the outer portion (8) of the restrictor member is substantially spherical.

7. A flow restrictor according to any preceding claim, in which the housing (1) is provided with compression fittings (5, 6) for attachment of pipes at opposite ends of the flow path.

FIG 1

FIG 2

European Patent
Office

# EUROPEAN SEARCH REPORT

Application Number

EP    91 30 9782

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-3 707 161 (CRAWFORD) <br> * abstract; figures * | 1-3,5-7 | F16L55/027 <br> F16K5/06 |
| A,,, <br> D | US-A-4 130 128 (KENEKO) <br><br> * abstract; figures * | 1-3,5,6 | |
| A | US-A-4 899 981 (THOMAS, JR.) <br> * abstract; figures * | 2 | |
| | | | TECHNICAL FIELDS SEARCHED (Int. Cl.5 ) <br><br> F16L <br> F16K |

The present search report has been drawn up for all claims

| Place of search | Date of completion of the search | Examiner |
|---|---|---|
| THE HAGUE | 15 JANUARY 1992 | Andreas Bartsch |

EPO FORM 1503 03.82 (P0401)